Europäisches Patentamt

European Patent Office

Office européen des brevets

(11) Veröffentlichungsnummer: **0 318 653**
**B1**

# EUROPÄISCHE PATENTSCHRIFT

(45) Veröffentlichungstag der Patentschrift:
20.06.90

(51) Int. Cl.⁵: **B60D 1/00**

(21) Anmeldenummer: 88115169.0

(22) Anmeldetag: 16.09.88

(54) **Vorrichtung zur Sicherung einer mit einer Anti-Schlinger-einrichtung versehenen Anhängerkupplung.**

(30) Priorität: 02.12.87 DE 3740830

(43) Veröffentlichungstag der Anmeldung:
07.06.89 Patentblatt 89/23

(45) Bekanntmachung des Hinweises auf die Patenterteilung:
20.06.90 Patentblatt 90/25

(84) Benannte Vertragsstaaten:
DE FR NL

(56) Entgegenhaltungen:
DE-A- 2 344 976
DE-U- 8 706 741
US-A- 4 291 557

(73) Patentinhaber: Firma Albert Berndes, Langekamp 23,
D-4990 Lübbecke 1(DE)

(72) Erfinder: Berndes, Karl-Josef, Auf dem Galienkamp 5,
D-4990 Lübbecke 1(DE)

(74) Vertreter: Stracke, Alexander, Dipl.-Ing. et al,
Jöllenbecker Strasse 164, D-4800 Bielefeld 1(DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die vorliegende Erfindung betrifft eine Vorrichtung zur Sicherung einer mit einer Anti-Schlingereinrichtung versehenen Anhängerkupplung gemäß dem Oberbegriff des Anspruchs 1.

Durch derartige Vorrichtungen, von denen eine beispielsweise aus dem DE-U 87 06 741.2 bekannt ist, wird das Kugelmaul derart verschlossen, daß ein Eindringen der an einem Kraftfahrzeug befestigten Kupplungskugel unmöglich ist, so daß ein Entwenden eines abgestellten Anhängers, Wohnwagens, Verkaufswagens od. dgl. wirksam verhindert wird.

Die erwähnte, bekannte Vorrichtung ist jedoch insofern als nachteilig anzusehen, als sie aus einer Vielzahl von Einzelteilen besteht, die einen relativ hohen Fertigungsaufwand erfordern, die andererseits aber auch eine einfache und bequeme Handhabung behindern.

Darüber hinaus ist es relativ einfach, die Verriegelung der Vorrichtung, die aus einem Vorhängeschloß besteht, beispielsweise mittels eines Bolzenschneiders, aufzubrechen, so daß die Diebstahlsicherung in ihrer Funktionsfähigkeit eingeschränkt ist.

Der vorliegenden Erfindung liegt demgegenüber die Aufgabe zugrunde, eine Vorrichtung der gattungsgemäßen Art so zu gestalten, daß sie einfach und konstengünstig herstell- und montierbar und bequem in der Handhabung ist und daß die Sicherheit gegen gewaltsames Öffnen verbessert wird.

Diese Aufgabe wird erfindungsgemäß durch die Kombination der im kennzeichnenden Teil des Anspruches 1 genannten Merkmale gelöst.

Die dort unter a genannten Merkmale sind aus der DE-A 23 44 976 bekannt.
Ein Schutz für diese Maßnahmen alleine wird daher nicht beansprucht.

Da sich die aus der genannten Offenlegungsschrift bekannte Vorrichtung in der Handhabung jedoch insofern als sehr umständlich erweist, als die Arretiereinrichtung solange in einer Arretierposition gehalten werden muß, bis sie durch die Schließeinrichtung, ein Steckschloß, in einer arretierten Endstellung blockiert wird, in jedem Fall also eine beidhändige Betätigung notwendig ist, kann die Aufgabe der vorliegenden Erfindung nicht ohne die weiteren kennzeichnenden Merkmale des Anspruches 1 gelöst werden.

Weiter kann sich die Arretiereinrichtung nach der DE-OS 23 44 976, also der Zugbolzen zusammen mit dem Riegelteil, in Nichtgebrauchsstellung, in der sie nicht blockiert wird, axial frei in der Ausnehmung bewegen.

Naturgemäß ist dadurch die Gefahr die Beschädigung einzelner Teile der Arretiereinrichtung, beispielsweise des Zugbolzens, relativ groß.

Ein weiterer Nachteil ist darin zu sehen, daß die Herstellung der Arretiereinrichtung aufwendig und demzufolge teuer ist, da sie aus einer Vielzahl von Einzelteilen besteht, die verhältnismäßig paßgenau zueinander hergestellt werden müssen und die überdies eine aufwendige Montage erforderlich machen.

Die neuen und erfinderischen Maßnahmen nach dem Anspruch 1 lassen demgegenüber eine die Kosten insgesamt senkende einfache Herstellung und Montage zu, die dann besonders günstig ist, wenn das Riegelteil und der Zugbolzen als einstückiges Gußteil ausgebildet sind, da sich dann eine mechanische Nachbearbeitung weitgehend erübrigt.

Nach der Erfindung besteht die Arretiereinrichtung praktisch aus lediglich drei Teilen, nämlich dem Zugbolzen zusammen mit dem Riegelteil, der Druckfeder und dem Anschlagstift, der nach einem Einbringen der Arretiereinrichtung in dem Verschlußteil zweckmäßigerweise durch eine quer durch den Zugbolzen verlaufende Bohrung geschoben wird.

Die sich einerseits am Boden der Ausnehmung und andererseits an der dem Zugbolzen zugewandten Grundfläche des Riegelteiles abstützende Druckfeder bewirkt, daß das Riegelteil zusammen mit dem Zugbolzen sowohl in Gebrauchsstellung, also wenn das Riegelteil in das Kupplungsmaul ragt, als auch in einer Nichtgebrauchsstellung, wenn beispielsweise die gesamte Vorrichtung vom Kupplungsgehäuse entfernt ist, sich immer in einer Arretierposition befindet.

Eine in nicht blockierter Stellung unkontrollierte, schlackernde Hin- und Herbewegung der Arretiereinrichtung ist nunmehr ausgeschlossen, so daß die Gefahr einer unbeabsichtigten Beschädigung herausragender Teile ausgeschlossen werden kann.

Da das Riegelteil zusammen mit dem angeordneten Zugbolzen in dem Verschlußteil unverlierbar festgelegt ist, ist auch die Handhabung der Vorrichtung nunmehr erheblich vereinfacht, wobei insbesondere dann, wenn die Schließeinrichtung aus einem Steckschloß besteht, alle zur vorrichtung gehörenden Teile auch bei Nichtgebrauch beieinander sind, so daß kein einzelnes Teil verlorengehen kann.

Des weiteren wird die Handhabung der Vorrichtung dadurch erheblich erleichtert, daß sie auf das Kupplungsgehäuse lediglich von der freien Stirnseite aus aufschiebbar ist, wobei eine automatische Arretierung durch das in das Kupplungsmaul einrastende Riegelteil erfolgt. Lediglich zu Beginn eines Aufschiebens auf das Kupplungsgehäuse muß das Riegelteil durch den Zugbolzen aus der Arretierungsposition bewegt werden. Das anschließende Blockieren mittels der Schließeinrichtung, vorzugsweise des genannten Steckschlosses, erfolgt ohne daß die Arretiereinrichtung nochmals betätigt werden muß. Dadurch ist eine erhebliche Handhabungserleichterung gegeben.

Eine bevorzugte Ausgestaltung der Erfindung sieht vor, daß das Abdeckelement die von der Oberseite des Kupplungsgehäuses her frei zugänglichen Köpfe der Schwingbolzen abdeckt, so daß es unmöglich wird, die seitlichen Lenker der Antischlingereinrichtung zu entnehmen. Auch diese Maßnahme stellt eine wesentliche Verbesserung gegenüber dem Stand der Technik dar.

In Weiterbildung der Erfindung sind das Verschlußteil und das Abdeckelement als einstückiges Stanz- oder Gußteil ausgebildet, so daß die Herstellung der Vorrichtung besonders preiswert wird.

Weitere vorteilhafte Ausgestaltungen der Erfindung sind in den Unteransprüchen gekennzeichnet.

Ein Ausführungsbeispiel der Erfindung wird nachstehend anhand beigefügter Zeichnungen beschrieben.

Es zeigen

Figur 1 die erfindungsgemäße Vorrichtung in einer Seitenansicht,

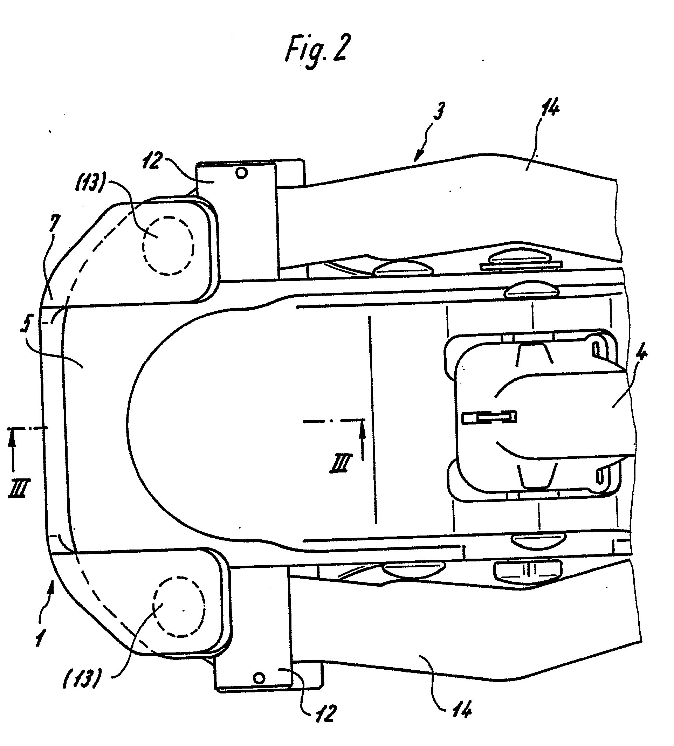

Figur 2 eine Draufsicht auf die Vorrichtung,

Figur 3 einen Teillängsschnitt durch die Vorrichtung gemäß der Linie III in Figur 2.

Eine in den Figuren dargestellte Vorrichtung zur Sicherung einer Anhängerkupplung eines Kraftfahrzeuganhängers ist insgesamt mit dem Bezugszeichen 1 versehen.

Die Anhängerkupplung besteht aus einem Kupplungsgehäuse 2 sowie einem an deren Oberseite schwenkbar angeordneten Handgriff 4 , mit dem eine Kugelpfanne 15 betätigbar ist, die Bestandteil eines Kupplungsmaules 10 ist. Dabei dient das Kupplungsmaul 10 der Aufnahme einer an einem nicht dargestellten Kraftfahrzeug befestigten Kupplungskugel.

Eine Antischlingereinrichtung 3, die zur Spurstabilisierung des zu ziehenden Anhängers dient, weist zwei an den sich gegenüberliegenden Seiten des Kupplungsgehäuses 2 angeordnete Lenker 14 auf, die jeweils über einen Schwenkbolzen 13 schwenkbar mit einem im vorderen, seitlichen, einem dem Kraftfahrzeuganhänger abgewandten Bereich angeordneten Flansch 5 des Kupplungsgehäuses 2 verbunden sind.

In jeweils einer, seitlich am Kupplungsgehäuse 2 angeordneten, geschlitzten Traverse 12 wird je ein Lenker 14 geführt.

Die Vorrichtung 1 ist von der freien Stirnseite des Kupplungsgehäuses 2 auf dieses aufgeschoben und bedeckt mit einem Verschlußteil 6 die Öffnung des Kupplungsmaules 10.

An dem Verschlußteil 6 ist ein Abdeckelement 7 festgelegt, das im Querschnitt etwa L-förmig ausgebildet ist und das den Flansch 5 an seiner Oberseite teilweise übergreift. Im Sinne einer Klammer ist also die Vorrichtung 1 über das Kupplungsgehäuse 2 geschoben, wobei ein durch das Verschlußteil 6 geführter Zugbolzen 9 mit seinem einen als Riegelteil 8 ausgebildeten Ende in Verschlußstellung in das Kupplungsmaul 10 ragt und die Vorrichtung 1 arretiert.

Über den Druckbolzen 9 ist eine Druckfeder 17 geführt, die sich einerseits am Grund einer Ausnehmung 18 des Verschlußteiles 6 und andererseits an der Unterseite des Riegelteiles 8 abstützt.

Die Ausnehmung 18 ist so bemessen, daß sie das Riegelteil 8 bei einem Ziehen des Zugbolzens 9 gegen die Wirkrichtung der Druckfeder 17 so weit aufnimmt, daß die Arretierung aufgehoben wird und die Vorrichtung 1 von dem Kupplungsgehäuse 2 abgenommen werden kann.

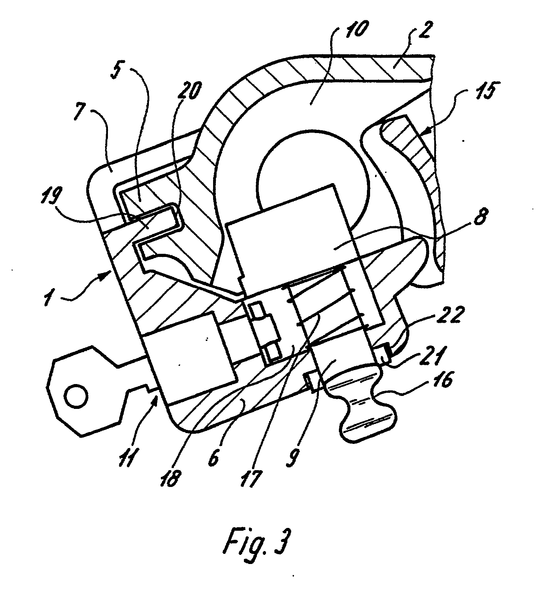

Zur Endlagebegrenzung des Zugbolzens 9 bzw. des Riegelteiles 8 in entspannter Stellung der Druckfeder 17 ist quer durch den Zugbolzen 9 ein Anschlagstift 21 geführt, der, wie in der Figur 3 ersichtlich, im vorliegenden Ausführungsbeispiel beidseitig aus dem Zugbolzen 9 herausragt und in Verschlußstellung der Vorrichtung 1 in einer auf der Unterseite des Verschlußteiles 6 vorgesehenen Nut 22 einliegt. Denkbar ist aber auch, daß der beispielsweise als Spannhülse ausgebildete Anschlagstift 14 sich direkt an der Außenfläche des Verschlußteiles 6 abstützt, wobei dann selbstverständlich keine Nut vorgesehen sein muß.

Ein als Schließeinrichtung dienendes Steckschloß 11, das von der freien Stirnseite der Vorrichtung 1 aus einschiebbar ist, ragt mit seinem Zylinder in die Ausnehmung 18, so daß diese für die Aufnahme des Riegelteiles 8 blockiert ist.

Um eine verbotene Manipulation an dem Zugbolzen 9 zu verhindern, ist vorgesehen, dessen aus der Vorrichtung 1 ragendes Ende mit einer Einschnürung 16 zu versehen, die praktisch eine Sollbruchstelle darstellt, die bei Gewalteinwirkung zu einem Bruch des Zugbolzens 9 an dieser Stelle führt und die erwähnte Manipulation unterbindet.

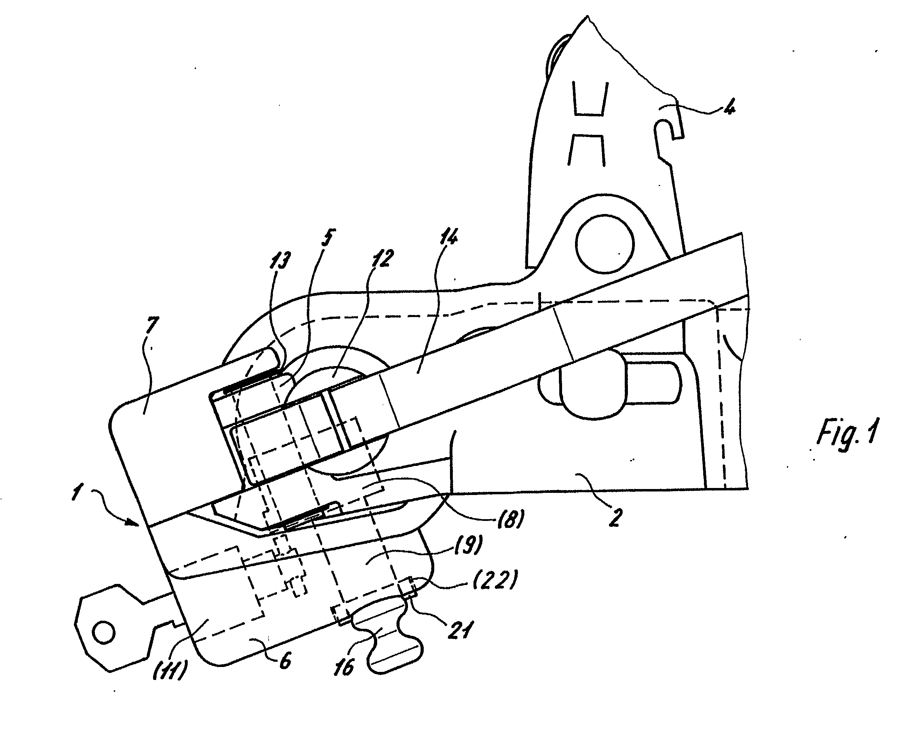

Wie besonders deutlich in der Figur 1 zu erkennen ist, überdeckt der den Flansch 5 abdeckende Schenkel des L-förmigen Abdeckelementes 7 auch den jeweiligen Kopf der Schwenkbolzen 13.

Dadurch wird der Zugang zu den Schwenkbolzen 13 so weit verhindert, daß es unmöglich ist, deren Köpfe gewaltsam zu zerstören. Die Lenker 14 sind daher ebenfalls gegen Diebstahl gesichert.

Wie die Figur 3 zeigt, ist der Flansch 5 aus Gewichtsersparnisgründen mit einer Nut 20 versehen, in die eine Zunge 19 des Abdeckelementes 7 hineinragt.

Das Verschlußteil 6 stützt sich an seiner dem Kupplungsgehäuse 2 zugewandten Seite an der Unterseite des Kupplungsgehäuses 2 ab, wodurch ein sicherer Halt der Vorrichtung 1 auf dem Kupplungsgehäuse 2 erreicht wird.

Bezugszeichenliste

1 Vorrichtung
2 Kupplungsgehäuse
3 Anti-Schlingereinrichtung
4 Handgriff
5 Flansch
6 Verschlußteil
7 Abdeckelement
8 Riegelteil
9 Zugbolzen
10 Kupplungsmaul
11 Steckschloß als Schließeinrichtung
12 Traverse
13 Schwenkbolzen
14 Lenker
15 Kugelpfanne
16 Einschnürung
17 Druckfeder
18 Ausnehmung
19 Zunge
20 Nut
21 Anschlagstift
22 Nut

## Patentansprüche

1. Vorrichtung zur Sicherung einer mit einer Antischlingereinrichtung (3) versehenen Anhängerkupplung eines Kraftfahrzeuganhängers, die in nicht angekuppelter Stellung des Kraftfahrzeuganhängers ein der Aufnahme einer an einem Kraftfahrzeug befestigten Kupplungskugel dienendes Kupplungsmaul (10) eines Kupplungsgehäuses (2) zumindest teilweise abdeckt, wobei die Antischlingereinrichtung (3) zwei seitliche Lenker (14) aufweist, die jeweils mittels eines Schwenkbolzens (13) an einem im vorderen, seitlichen, dem Kraftfahrzeuganhänger abgewandten Bereich angeordneten Flansch (5) des Kupplungsgehäuses (2) schwenkbar festgelegt sind, **gekennzeichnet durch** folgende Merkmale:
a ein an sich bekanntes Verschlußteil (6) mit einem daran festgelegten, sich am Flansch (5) abstützenden Abdeckelement (7) ist von der freien Seite des Kupplungsgehäuses (2) her aufgeschoben und weist eine durch eine Schließeinrichtung (11) blockierbare Arretiereinrichtung auf, die aus einem mit einer Druckfeder (17) belasteten, in das Kupplungsmaul (10) ragenden Riegelteil (8) und einem frei zugänglichen Zugbolzen (9) besteht,
b das Riegelteil (8) und der Zugbolzen (9) sind fest miteinander verbunden,
c die über den Zugbolzen (9) geführte Druckfeder (17) stützt sich einerseits am Boden einer Ausnehmung (18) des Verschlußteiles (6), in die das Riegelteil (8) einführbar ist, und andererseits an der dem Zugbolzen (9) zugewandten Grundfläche des Riegelteiles (8) ab,
d der Zugbolzen (9) weist einen querverlaufenden Anschlagstift (21) auf, der den Zugbolzen (9) mindestens einseitig überragt und sich bei entlasteter Stellung der Druckfeder (17) an der Außenseite des Verschlußteiles (6) abstützt.

2. Vorrichtung nach Anspruch 1, dadurch gekennzeichnet, daß durch das Abdeckelement (7) die von der Oberseite des Kupplungsgehäuses (2) her frei zugänglichen Köpfe der Schwenkbolzen (13) abgedeckt sind.

3. Vorrichtung nach Anspruch 1, dadurch gekennzeichnet, daß die Schließeinrichtung (11) von der freien Stirnseite aus in das Verschlußteil (6) einführbar ist.

4. Vorrichtung nach Anspruch 1, dadurch gekennzeichnet, daß der Zugbolzen (9) auf seinem aus dem Verschlußteil (6) ragenden freien Endbereich eine Einschnürung (16) aufweist.

5. Vorrichtung nach Anspruch 1, dadurch gekennzeichnet, daß der Anschlagstift (21) in Gebrauchsstellung der Arretiereinrichtung in einer Nut (22) an der Außenseite des Verschlußteiles (6) einliegt.

6. Vorrichtung nach Anspruch 1, bei der der Flansch (5) eine querverlaufende Nut (20) aufweist, dadurch gekennzeichnet, daß das Abdeckelement (7) mit einer Zunge (19) versehen ist, die in die Nut (20) hineinragt.

7. Vorrichtung nach Anspruch 1, dadurch gekennzeichnet, daß das Verschlußteil (6) und das Abdeckelement (7) als einstückiges Stanz- oder Gußteil ausgebildet sind.

8. Vorrichtung nach Anspruch 1, dadurch gekennzeichnet, daß der Zugbolzen (9) und das Riegelteil (8) als einstükkiges Gußteil ausgebildet sind.

9. Vorrichtung nach Anspruch 1, dadurch gekennzeichnet, daß sich das Verschlußteil (6) an der Unterseite des Kupplungsgehäuses (2) abstützt.

## Claims

1. Device for securing a trailer coupling of a motor-vehicle trailer, said trailer coupling being provided with an anti-roll apparatus (3) and, with the motor-vehicle trailer in the non-coupled position, at least partially covering a coupling jaw (10) of a coupling housing (2), said coupling jaw (10) serving to accept a coupling ball mounted on a motor vehicle, with the anti-roll apparatus (3) comprising two lateral links (14), said links (14) each being swivellingly fixed by means of a swivel pin (13) on a flange (5) of the coupling housing (2), said flange (5) being disposed in the front side area facing away from the motor-vehicle trailer, characterized by the following features:
a) a known sealing part (6) with a cover element (7), fixed thereto and supported on the flange (5), is slipped on from the free side of the coupling housing (2) and comprises a locking apparatus, said locking apparatus being lockable by a closing apparatus (11) and consisting of a locking part (8) – loaded by a compresseion spring (17) and projecting into the coupling jaw (10) – and of a freely accessible tie bolt (9), the locking part (8) and the tie bolt (9) are permanently connected to one another, the compression spring (17), guided by the tie bolt (9), is supported, firstly, on the base of a recess (18) of the sealing part (6) – with the locking part (8) being introducible into said recess (18) – and, secondly, on the base surface of the locking part (8), said base surface facing the tie bolt (9), the tie bolt (9) comprises a transversely extending stop pin (21), said stop pin (21) projecting beyond the tie bolt (9) at least on one side and, with the compression spring (17) in the relaxed position, being supported on the outside of the sealing part (6).

2. Device according to claim 1, characterized in that the heads of the swivel pins (13), said heads being freely accessible from the top side of the coupling housing (2), are covered by the cover element (7).

3. Device according to claim 1, characterized in that the closing apparatus (11) is introducible, from the free end face, into the sealing part (6).

4. Device according to claim 1, characterized in that the tie bolt (9) comprises a throat (16) on its free end region projecting out of the sealing part (6).

5. Device according to claim 1, characterized in that, with the locking apparatus in the operating position, the stop pin (21) lies in a groove (22) on the outside of the sealing part (6).

6. Device according to claim 1 in which the flange (5) comprises a transversely extending groove (20), characterized in that the cover element (7) is provided with a tongue (19), said tongue (19) projecting into the groove (20).

7. Device according to claim 1, characterized in that the sealing part (6) and the cover element (7) are in the form of a one-piece stamping or casting.

8. Device according to claim 1, characterized in that the tie bolt (9) and the locking part (8) are in the form of a one-piece casting.

9. Device according to claim 1, characterized in that the sealing part (6) is supported on the bottom side of the coupling housing (2).

**Revendications**

1. Dispositif de blocage d'un attelage de remorque équipé d'un dispositif anti-roulis (3), d'une remorque d'un véhicule automobile, qui en position non attelée de la remorque recouvre au moins partiellement une mâchoire d'attelage (10), servant à loger une sphère d'attelage fixée sur le véhicule automobile, le dispositif anti-roulis (3) comportant deux bras oscillants (14) latéraux qui sont fixés pivotant chacun sur une bride (5) du boîtier d'attelage (2), située dans la zone avant, latérale, éloignée de la remorque du véhicule, au moyen d'un axe de pivotement (13), caractérisé par les caractéristiques suivantes:

a) un élément de fermeture (6), connu en soi, avec un élément de recouvrement (7), fixé sur le premier, prenant appui contre la bride (5), est enfilé, à partir du côté libre du boîtier d'attelage (2), et comporte un dispositif d'arrêt pouvant être bloqué par un dispositif de verrouillage (11), constitué d'un élément à verrou (8), soumis à l'action d'un ressort de pression (17), et pénétrant dans la mâchoire d'attelage (10), ainsi que d'un tirant (9) librement accessible,

b) l'élément à verrou (8) et le tirant (9) sont solidaires l'un de l'autre,

c) le ressort de pression (17) passant sur le tirant (9), prend appui d'une part sur le fond d'un évidement (18) de l'élément de fermeture (6) dans lequel peut être introduit l'élément à verrou (8), et d'autre part sur la surface de base de l'élément à verrou (8), tournée vers le tirant (9),

d) le tirant (9) présente un goujon d'arrêt (21) transversal qui dépasse, au moins d'un côté, le tirant (9) et qui prend appui contre la face extérieure de l'élément de fermeture (6), en position non sollicitée du ressort de pression (17).

2. Dispositif selon la revendication 1, caractérisé en ce que les têtes des axes de pivotement (13), librement accessibles à partir de la face supèrieure du boîtier d'attelage (2), sont recouvertes par l'élément de recouvrement (7).

3. Dispositif selon la revendication 1, caractérisé en ce que le dispositif de fermeture (11) peut être introduit dans l'élément de fermeture (6), à partir de la face frontale libre.

4. Dispositif selon la revendication 1, caractérisé en ce que le tirant (9) présente un étranglement (16), sur sa zone terminale libre, ressortant de l'élément de fermeture (6).

5. Dispositif selon la revendication 1, caractérisé en ce que le goujon d'arrêt (21) repose, en position d'utilisation du dispositif d'arrêt, dans une rainure (22), sur la face extérieure de l'élément de fermeture (6).

6. Dispositif selon la revendication 1, dans lequel la bride (5) présente une rainure (20), transversale, caractérisé en ce que l'élément de recouvrement (7) est pourvu d'une languette (19) qui s'engage dans la rainure (20).

7. Dispositif selon la revendication 1, caractérisé en ce que l'élément de fermeture (6) et l'élément de recouvrement (7) sont un élément découpé ou en fonte moulée, réalisé d'une seule pièce.

8. Dispositif selon la revendication 1, caractérisé en ce que le tirant (9) et l'élément de verrou (8) sont réalisés d'une seule pièce, en fonte moulée.

9. Dispositif selon la revendication 1, caractérisé en ce que l'élément de fermeture (6) prend appui sur la face inférieure du boîtier d'attelage (2).

Fig.1

# Fig. 2

Fig. 3